# EUROPEAN PATENT SPECIFICATION

(11) **EP 3 619 725 B1**
(45) Date of publication and mention of the grant of the patent: **27.11.2024**
(21) Application number: 18720630.5
(22) Date of filing: 03.05.2018
(51) Int. Cl.: H01B 7/295, F16L 57/04, A62C 2/06, A62C 99/00

(54) **METHOD OF PROTECTING AN OBJECT AGAINST FIRE AND FIRE PROTECTIVE COVERING FOR AN OBJECT**
VERFAHREN ZUM SCHUTZ EINES GEGENSTANDS VOR FEUER UND FEUERSCHUTZABDECKUNG FÜR EINEN GEGENSTAND
PROCÉDÉ DE PROTECTION D'UN OBJET CONTRE LE FEU ET REVÊTEMENT POUR PROTECTION CONTRE LE FEU D'UN OBJET

(30) Priority: 03.05.2017 EP 17169186
(43) Date of publication of application: 11.03.2020
(73) Proprietor: Favuseal AS, 1351 Rud (NO)
(72) Inventor: SCHLYTTER-HENRICHSEN, Christian, 1351 Rud (NO)
(74) Representative: Plougmann Vingtoft a/s
(86) International application number: PCT/EP2018/061319
(87) International publication number: WO 2018/202760

(56) References cited:
- WO-A1-2016/156627
- CN-U- 201 812 530
- DE-A1- 19 725 301
- DE-A1- 19 949 167
- DE-T2- 60 017 699
- JP-A- 2003 259 541
- US-A- 5 750 927
- US-A- 5 758 694
- 3M: "Fire Protection 3M (TM) Fire Protection Products Oil & Gas Applications for Critical Components", 1 January 2013 (2013-01-01), Internet, pages 1 - 192, XP055882704, Retrieved from the Internet <URL:https://multimedia.3m.com/mws/media/1130786O/3m-interam-endothermic-mat-e-5a-4-interactive-guide.pdf> [retrieved on 20220124]

## Description

### FIELD OF THE INVENTION

The present invention relates to a method of protecting an object against fire. In particular, it relates to a method by which it is possible to prolong the time for which an outer cladding covering the object remains intact in case of exposure to fire, such as hydrocarbon fire or jet fire. The invention also relates to a fire protective covering for an object.

### BACKGROUND OF THE INVENTION

Passive fire protection is used to protect objects against fire to retard the spreading of the fire and avoid loss of integrity of the object being protected. In general, such objects include electric cables, pipes and tanks conducting or containing hydrocarbons or other flammable materials, ventilation ducts, safety deposit boxes, penetration seals for cables and pipes in walls etc. Heat sources causing hazardous risks to an object include cellulosic fire, hydrocarbon fire, jet fire, hot gases, infrared radiated heat etc. According to ISO 834-3, hydrocarbon fire results in heat exposure up to 200 kW/m², and jet fire results in heat exposure exceeding 200 kW/m².

Known passive fire protection methods comprise the use of structural components, such as fire-resistant walls, floors, and doors. It may also be in the form of e.g. an insulating layer of mineral fibres which will delay the heat from the fire in reaching the protected object on the "cold" side of the insulating layer. Other known technologies use intumescent materials which upon heating will expand and increase in volume. An example of such a type of material is known from CN201812530.

Still other technologies use materials which upon heating will go through one or more phases in which the material will react chemically and/or physically with one or more endothermic reactions, e.g. where hydrates are spent and water vapour is released, which has a cooling effect. Materials with such endothermic properties include polymer-based materials and rubber-based materials which can be applied to the surface of the object to be protected. An example of a fire protection material comprising a flat carrier material made of non-combustible mineral fibres coated with an intumescent substance is known from DE 197 25 301 A1.

For some applications, fire protection of an object is provided in the form of the mentioned fire protection technologies, but with a metal-based outer cladding providing mechanical integrity to the technology used for the passive fire protection. Such a metal-based cladding also provides mechanical protection e.g. against wear and tear, and influence from the weather, and it removes any erosion issues related especially to any jet fire curves. However, at high temperatures in case of fire, and in particular hydrocarbon fire and jet fire, there is a risk that the metal cladding will erode and melt away resulting in failure of the adopted fire protection technology.

Oil installations around the world are becoming more and more complex. Consequently, more equipment is placed on them and they are now very condensed and may e.g. have several pipes arranged adjacent to each other. If such pipes are fire protected with an intumescent paint based system, the intumescent paint will be designed to expand by upto 500-900% from its original state in case of exposure to fire. This expansion is required for the paint to build up a thermal barrier against the heat and, consequently, delay the time it takes for the heat to penetrate the reacted paint. If such expansion is interrupted, e.g. due to lack of free space, the technology does not work as intended and it will fail in providing the desired protection.

Hence, an improved method of protecting an object against fire would be advantageous, and in particular a more efficient and/or reliable method would be advantageous.

### OBJECT OF THE INVENTION

It is an object of the present invention to provide a method of protecting an object against fire which results in a longer time to failure of an outer cladding covering the object for a given fire scenario.

It is another object of the present invention to provide a method of protecting an object against fire that can be applied to an already installed object.

It is an object of at least some embodiments of the invention to provide a method of protecting an object against fire with which the outer diameter of an outer cladding remains substantially the same before and after being exposed to fire.

It is a further object of the present invention to provide an alternative to the prior art.

In particular, it may be seen as an object of the present invention to provide a method of protecting an object against fire that solves the above mentioned problems of the prior art.

### SUMMARY OF THE INVENTION

According to first aspect of the invention a method of protecting an object against fire is provided as defined in claim 1.

By "endothermic material" is preferably meant a material which when subjected to heat undergoes a phase-changing state incorporating one or more endothermic reaction processes. As this is an energy-demanding reaction, some of the heat from the fire will be consumed by the endothermic process and thereby delay the increase in temperature of the object to be protected. More importantly, it will also increase the time to failure of the outer cladding covering the endothermic material, as it will, in effect, cool down the cladding from the inside and consequently prolong the time to failure of the outer cladding.

By "tape" is preferably meant in the form of a band having a width and being long enough to be wound several times around the object. The specific length for a given application depends on the size of the object to be protected and the amount of overlap between subsequent windings. The term "a band" does not exclude that the endothermic material can be in the form of successively arranged separate tapes of material.

The stepped outer surface results in air cavities being formed underneath the outer cladding; this will be shown in relation to the figures. When the object is exposed to a fire and the thermal load of the fire hits the outer cladding, such small air cavities will allow for a slight swelling of the endothermic material that will, as a consequence of the fire, react and release water directly to the outer cladding from underneath. As mentioned, this particular reaction process will cool down the outer cladding from underneath and prolong the time until failure and consequently breach of the cladding itself. Thus, arranging the components of the fire protection as described above will inherently increase the integrity of the outer cladding by preventing or delaying e.g. metal melt down, or deformation of the outer cladding itself.

In presently preferred embodiments of the invention, the outer cladding is arranged in direct contact with the endothermic material. Hereby the cooling effect of the endothermic material can be directly applied to the outer cladding so that the cooling is as efficient as possible. Due to the stepped outer surface of the endothermic material, the direct contact will be where the diameter of the wound endothermic material is largest; this will be shown in the figures. Alternatively, a layer of intermediate material may be arranged between the endothermic material and the outer cladding to provide further protection. Such a material may e.g. be used to provide protection against moisture. However, such an intermediate layer should not limit the cooling effect by any significant amount.

An overlap between subsequent windings of the tape of endothermic material may be 20 to 80% of a width of the tape, such as 25 to 50%.

In some embodiments of the invention, more than one layer of the endothermic material is applied. This may e.g. be necessary to fulfil the requirements in a given fire class.

The outer cladding may be made steel. An example of a steel typically used for fire protective claddings is AISI 316 SS. Such a metal cladding has been found useful in relation to hydrocarbon fire scenarios (1,100 °C) or jet fire scenarios (1,200 - 1,500 °C). Thus, the outer cladding may be dimensioned and shaped so that the outer diameter thereof remains substantially the same before and after the outer cladding has been exposed to temperatures above 1,100°C, such as temperatures between 1,200 and 1,500°C. Keeping the outer dimension constant in a fire is regarded advantageous as land-terminals, oil rigs, Floating Production Storage and Offloading vessels, and Floating Liquified Natural Gas vessels are becoming more complex and condensed with respect to e.g. pipework. Traditionally used expandable fire protection technologies require free space in order to work as they might expand by upto 500-900% from their virgin state. As described above, if such an expandable technology is not allowed to fully expand freely, it will loose its inherent fire protection properties, and the technology will not work as intended. Therefore, with traditionally used fire protection technologies based on expanding materials, it is very important to make sure that the material is free to expand. However, there is not always room for this. It is therefore an advantage of the present invention that with such a method, the outer dimension of the outer cladding remains substantially unchanged before and after being exposed to fire.

Examples of other materials which may also be used for the outer cladding are aluminium covering, silica tape reinforced with steel wiring, Zink-based covering, stainless steel metal covering, and glass fibre reinforced polymer (GRP) covering reinforced with steel wiring.

The endothermic material may be a rubber-based or a polymer-based material. The endothermic material is a material which will, at a first elevated temperature, undergo a first endothermic process during which water is released and evaporated and, at a second elevated temperature higher than the first elevated temperature, undergo a second endothermic process during which a physically and thermally stable fire barrier is created. An example of such a material will be presented in the detailed description.

The endothermic material may contain inorganic fillers in a binder. It may e.g. be a thermoplastic material composed of a co-polymer, such as an ethylene co-polymer. Such a technology has proven to be robust to weathering conditions over time and fluctuations in temperature.

In some embodiments of the invention, the object to be protected has already been installed before the endothermic material and the outer cladding are arranged thereon. Thus, the method can be used to up-grade the fire resistance of an object and thereby possibly of a whole installation of which it forms part.

According to a second aspect of the present invention a fire protective covering for an object is provided as defined in claim 11.

The outer cladding may made from steel, such as AISI 316 SS.

The outer cladding may dimensioned and shaped so that the outer diameter thereof remains substantially the same before and after the outer cladding has been exposed to temperatures above 1,100°C, such as temperatures between 1,200 to 1,500°C.

The first and second aspects of the present invention may each be combined with any of the other aspects. This means that the features now described in relation to the first aspect is also possible features of the second aspect of the invention.

These and other aspects of the invention will be apparent from and elucidated with reference to the embodiments described hereinafter.

### BRIEF DESCRIPTION OF THE FIGURES

The method of protecting an object against fire according to the invention will now be described in more detail with regard to the accompanying figures. The figures show one way of implementing the present invention and is not to be construed as being limiting to other possible embodiments falling within the scope of the attached claim set.
Figure 1 schematically shows an object to be protected against fire, the object having an endothermic material helically wound around it.
Figure 2 schematically and in partial view shows how the helical winding of the tape of endothermic material results in air cavities being formed underneath the outer cladding.

### DETAILED DESCRIPTION OF AN EMBODIMENT

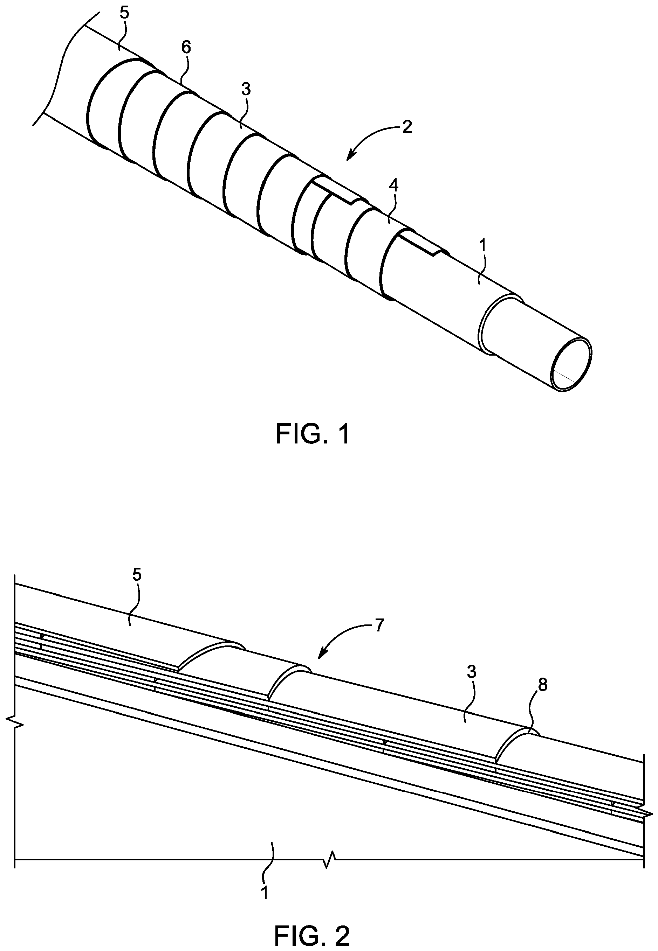

Figure 1 schematically shows how an object 1 can be protected against fire by use of a method according to the present invention. The illustrated object 1 is in the form of a pipe, but the method can be used in relation to any geometry which is adapted to receive the wound material. The method comprises arranging an endothermic material 2 in the form of a tape 3 around the object 1 so that it covers at least a part of the object 1. In the embodiment in figure 1, the object 1 has two layers helically wound around it. The overlap between subsequent windings of the tape 3 is typically between 20 to 80% of a width of the tape, such as 25 to 50%. However, any amount of overlap is covered by the scope of the present invention. The outermost of the layers is an endothermic material. The innermost layer 4 may also be an endothermic material, such as the same in the outermost layer 3, but it may also be another material providing other types of protection to the object 1, such as thermal insulation or moisture protection. It can e.g. be a fibre-based material with fibres made from stone wool, Alcali Earth Silicates, or glass fibre impregnated aerogels. An outer cladding 5 is arranged to cover at least a part of the endothermic material 2. In figure 1, the outer cladding 5 covers only a small part of the endothermic material 2, but that is for illustrative purposes only; i.e. to more clearly illustrate the endothermic material. In a real use, the outer cladding 5 would typically cover all or most of the endothermic material 2.

As shown in figure 1, the endothermic material is provided as a tape 3 which is applied by helically winding the tape 3 in an overlapping manner resulting in a stepped outer surface 6 facing towards the outer cladding 5.

Figure 2 schematically shows a part of the embodiment in figure 1. The figure illustrates how the helical winding of the tape 3 of endothermic material results in air cavities 7 being formed underneath the outer cladding 5 at the edges 8 of the tape 3. Preferably, the outer cladding 5 is arranged in direct contact with the endothermic material so that an efficient cooling of the outer cladding 5 can be ensured.

As explained above, such an arrangement means that when the object 1 is exposed to a fire, and the thermal load of the fire hits the outer cladding 5, such small air cavities 7 will allow for a slight swelling of the endothermic material 2 that will, as a consequence of the fire, absorb some of the heat and initiate an endothermic reaction. This particular reaction process will therefore prolong the time until failure and consequently breach of the outer cladding 5 itself.

The outer cladding 5 is typically made from a metal, such as steel. An example of a steel typically used for fire protective claddings is AISI 316 SS. However, other materials are also covered by the scope of protection.

The endothermic material 2 is preferably a rubber-based or a polymer-based material. The endothermic material 2 is a material which will, at a first elevated temperature, undergo a first endothermic process during which water is released and evaporated and, at a second elevated temperature higher than the first elevated temperature, undergo a second endothermic process during which a physically and thermally stable fire barrier is created. Such a first endothermic process will cool down the outer cladding 5 from underneath and consequently prolong the time to failure. Such a second endothermic process typically results in the formation of a physically and thermally stable substance forming a fire barrier and will also, to some extent, cool off the outer cladding prolonging the time to failure. The resulting thermally stable substance may have a low thermal conductivity, and as a result, will delay the heat penetration considerably in time, and yield further protection against damage of the object 1.

An example of an endothermic polymer-based material which can be used in relation to the present invention is the product FAVUSEAL^{®} NKX-6174 available from Favuseal AS, Norway. FAVUSEAL^{®} NKX-6174 is a thermoplastic material containing inorganic fillers in a binder composed of an ethylene copolymer. It may e.g. be an ethylene vinyl acetate (EVA) based material which is highly filled with Alumina Tri-hydrate, which will lead to a very strong endothermic reaction process when exposed to temperatures in excess of 180 °C. The second endothermic reaction process starts at 700-800 °C where a micro-porous steady state ceramic will be generated. This particular micro-porous state will have a very low thermal conductivity coefficient when, for instance, the invention is exposed to a standard 250 kW/m² jet fire. The thermal conductivity coefficient has been identified by numerous jet fire tests conducted to be at 0.05 (W/m/K) at 1,000 °C and 0.04 at 1,300 °C for various jet fire scenarios.

During exposure to flame or heat, FAVUSEAL^{®} NKX-6174 goes through the following stages of transformation:
- 90 °C Softening
- 200 °C Evolution of water, swelling
- 300 °C Pyrolysis of the polymeric binders
- 800 °C Formation of rigid cellular ceramics stable up to 1,500 °C

When FAVUSEAL^{®} NKX-6174 is subjected to heat, for example in a fire, two phase transitions take place. The first phase transition takes place between 200 and 250 °C and the second phase transition takes place between 700 and 800 °C. At the first phase transition, crystal water is generated from the O-H groups in the fillers. The water evaporates and the reaction is strongly endothermic, i.e. heat absorbing. The temperature behind the barrier of FAVUSEAL^{®} NKX-6174 will not exceed approximately 300 °C as long as this reaction takes place because this process actually consumes energy which is used to release the water. The second phase transition is at 700-800 °C creating a solid micro-porous ceramic substance with extreme very low thermal conductivity which also is physically stable.

The method according to the present invention may be used to add fire protection properties to an object 1 which has already been installed before the endothermic material 2 and the outer cladding 5 is arranged thereon. Alternatively, the fire protection may be applied as part of the initial installation process.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. In addition, the mentioning of references such as "a" or "an" etc. should not be construed as excluding a plurality. The use of reference signs in the claims with respect to elements indicated in the figures shall also not be construed as limiting the scope of the invention.

## Claims

1. Method of protecting an object (1) against fire, the method comprising:
- arranging an endothermic material (2) around the object (1) so that it covers at least a part of the object (1), and
- arranging an outer cladding (5) covering at least a part of the endothermic material (2),
wherein the endothermic material (2) is provided as a tape (3) which is applied by helically winding the tape (3) in an overlapping manner resulting in a stepped outer surface (6) facing towards the outer cladding (5),
wherein the outer cladding (5) comprises metal, and
wherein the endothermic material (2) is a material which will, at a first elevated temperature, undergo a first endothermic process during which water is released and evaporated and, **characterised in that**, the endothermic material (2) is a material which will, at a second elevated temperature higher than the first elevated temperature, undergo a second endothermic process during which a physically and thermally stable fire barrier is created.

2. Method according to claim 1, wherein the outer cladding (5) is made of metal.

3. Method according to claim 1 or 2, wherein the outer cladding (5) is arranged in direct contact with the endothermic material (2).

4. Method according to any of the preceding claims, wherein an overlap between subsequent windings of the tape (3) is 20 to 80% of a width of the tape, such as 25 to 50%.

5. Method according to any of the preceding claims, wherein more than one layer (3, 4) of the endothermic material (2) is applied.

6. Method according to any of the preceding claims, wherein the outer cladding (5) is made from steel, such as AISI 316 SS.

7. Method according to any of the preceding claims, wherein the outer cladding is dimensioned and shaped so that the outer diameter thereof remains substantially the same before and after the outer cladding has been exposed to temperatures above 1,100°C, such as temperatures between 1,200 and 1,500°C.

8. Method according to any of the preceding claims, wherein the endothermic material (2) is a rubber-based or a polymer-based material.

9. Method according to any of the preceding claims, wherein the endothermic material (2) contains inorganic fillers in a binder.

10. Method according to any of the preceding claims, wherein the object (1) has already been installed before the endothermic material (2) and the outer cladding (5) are arranged thereon.

11. Fire protective covering for an object (1), the covering comprising:
- an endothermic material (2) provided as a tape (3) and adapted to be helically wound around the object (1) in an overlapping manner resulting in a stepped outer surface (6) facing towards an outer cladding (5), and
- the outer cladding (5) adapted to be arranged so that it covers at least a part of the endothermic material (2),
wherein the outer cladding (5) comprises metal, and
wherein the endothermic material (2) is a material which will, at a first elevated temperature, undergo a first endothermic process during which water is released and evaporated and, **characterised in that**, the endothermic material (2) is a material which will, at a second elevated temperature higher than the first elevated temperature, undergo a second endothermic process during which a physically and thermally stable fire barrier is created.

12. Fire protective covering according to claim 11, wherein the outer cladding (5) is made of metal.

13. Fire protective covering according to claim 11 or 12, wherein the outer cladding (5) is made from steel, such as AISI 316 SS.

14. Fire protective covering according to any of claims 11 to 13, wherein the outer cladding is dimensioned and shaped so that the outer diameter thereof remains substantially the same before and after the outer cladding has been exposed to temperatures above 1,100°C, such as temperatures between 1,200 and 1,500°C.

## Patentansprüche

1. Verfahren zum Schutz eines Gegenstands (1) vor Feuer, wobei das Verfahren umfasst:
- Anordnen eines endothermen Materials (2) um den Gegenstand (1) herum, sodass es zumindest einen Teil des Gegenstands (1) abdeckt, und
- Anordnen einer Außenumkleidung (5), die zumindest einen Teil des endothermen Materials (2) abdeckt,
wobei das endotherme Material (2) als ein Band (3) bereitgestellt ist, das durch spiralförmiges Wickeln des Bands (3) auf eine überlappende Weise angebracht ist, was zu einer abgestuften Außenoberfläche (6) führt, die der Außenumkleidung (5) zugewandt ist,
wobei die Außenumkleidung (5) Metall umfasst, und
wobei das endotherme Material (2) ein Material ist, das bei einer ersten erhöhten Temperatur einen ersten endothermen Prozess durchläuft, bei dem Wasser freigesetzt und verdampft wird, und **dadurch gekennzeichnet, dass** das endotherme Material (2) ein Material ist, das bei einer zweiten erhöhten Temperatur, die höher als die erste erhöhte Temperatur ist, einen zweiten endothermen Prozess durchläuft, bei dem eine physisch und thermisch stabile Feuerbarriere geschaffen wird.

2. Verfahren nach Anspruch 1, wobei die Außenumkleidung (5) aus Metall gefertigt ist.

3. Verfahren nach Anspruch 1 oder 2, wobei die Außenumkleidung (5) in direktem Kontakt mit dem endothermen Material (2) angeordnet ist.

4. Verfahren nach einem der vorstehenden Ansprüche, wobei eine Überlappung zwischen aufeinanderfolgenden Wicklungen des Bands (3) 20 bis 80 % einer Breite des Bands beträgt, beispielsweise 25 bis 50 %.

5. Verfahren nach einem der vorstehenden Ansprüche, wobei mehr als eine Schicht (3, 4) des endothermen Materials (2) angebracht ist.

6. Verfahren nach einem der vorstehenden Ansprüche, wobei die Außenumkleidung (5) aus Stahl gefertigt ist, beispielsweise AISI 316 SS.

7. Verfahren nach einem der vorstehenden Ansprüche, wobei die Außenumkleidung so bemessen und geformt ist, dass der Außendurchmesser davon vor und nach einem Aussetzen der Außenumkleidung an Temperaturen von über 1.100 °C, beispielsweise Temperaturen zwischen 1.200 und 1.500 °C, im Wesentlichen gleich bleibt.

8. Verfahren nach einem der vorstehenden Ansprüche, wobei das endotherme Material (2) ein Material auf Kautschukbasis oder Polymerbasis ist.

9. Verfahren nach einem der vorstehenden Ansprüche, wobei das endotherme Material (2) anorganische Füllstoffe in einem Bindemittel enthält.

10. Verfahren nach einem der vorstehenden Ansprüche, wobei der Gegenstand (1) bereits vor dem Anordnen des endothermen Materials (2) und der Außenumkleidung (5) darauf installiert wurde.

11. Feuerschutzabdeckung für einen Gegenstand (1), wobei die Abdeckung umfasst:
- ein endothermes Material (2), das als ein Band (3) bereitgestellt ist und dafür ausgelegt ist, spiralförmig auf eine überlappende Weise um den Gegenstand (1) herum gewickelt zu sein, was zu einer abgestuften Außenoberfläche (6) führt, die einer Außenumkleidung (5) zugewandt ist, und
- wobei die Außenumkleidung (5) dafür ausgelegt ist, so angeordnet zu sein, dass sie zumindest einen Teil des endothermen Materials (2) abdeckt,
wobei die Außenumkleidung (5) Metall umfasst, und
wobei das endotherme Material (2) ein Material ist, das bei einer ersten erhöhten Temperatur einen ersten endothermen Prozess durchläuft, bei dem Wasser freigesetzt und verdampft wird, und **dadurch gekennzeichnet, dass** das endotherme Material (2) ein Material ist, das bei einer zweiten erhöhten Temperatur, die höher als die erste erhöhte Temperatur ist, einen zweiten endothermen Prozess durchläuft, bei dem eine physisch und thermisch stabile Feuerbarriere geschaffen wird.

12. Feuerschutzabdeckung nach Anspruch 11, wobei die Außenumkleidung (5) aus Metall gefertigt ist.

13. Feuerschutzabdeckung nach Anspruch 11 oder 12, wobei die Außenumkleidung (5) aus Stahl gefertigt ist, beispielsweise AISI 316 SS.

14. Feuerschutzabdeckung nach einem der Ansprüche 11 bis 13, wobei die Außenumkleidung so bemessen und geformt ist, dass der Außendurchmesser davon vor und nach einem Aussetzen der Außenumkleidung an Temperaturen von über 1.100 °C, beispielsweise Temperaturen zwischen 1.200 und 1.500 °C, im Wesentlichen gleich bleibt.

## Revendications

1. Procédé de protection d'un objet (1) contre le feu, le procédé comprenant les étapes consistant à :
- disposer un matériau endothermique (2) autour de l'objet (1) de manière qu'il recouvre au moins une partie de l'objet (1), et
- disposer une gaine externe (5) recouvrant au moins une partie du matériau endothermique (2),
dans lequel le matériau endothermique (2) est fourni sous forme d'une bande (3) qui est appliquée par enroulement hélicoïdal de la bande (3) d'une manière chevauchante conduisant à une surface externe étagée (6) faisant face à la gaine externe (5),
dans lequel la gaine externe (5) comprend du métal, et
dans lequel le matériau endothermique (2) est un matériau qui, à une première température élevée, subira un premier processus endothermique au cours duquel de l'eau est libérée et évaporée, et **caractérisé en ce que** le matériau endothermique (2) est un matériau qui, à une seconde température élevée, supérieure à la première température élevée, subira un second processus endothermique au cours duquel est créée une barrière au feu physiquement et thermiquement stable.

2. Procédé selon la revendication 1, dans lequel la gaine externe (5) est constituée de métal.

3. Procédé selon la revendication 1 ou 2, dans lequel la gaine externe (5) est disposée en contact direct avec le matériau endothermique (2).

4. Procédé selon l'une quelconque des revendications précédentes, dans lequel un chevauchement entre des enroulements successifs de la bande (3) représente 20 à 80 %, comme 25 à 50 %, d'une largeur de la bande.

5. Procédé selon l'une quelconque des revendications précédentes, dans lequel plus d'une couche (3, 4) du matériau endothermique (2) est appliquée.

6. Procédé selon l'une quelconque des revendications précédentes, dans lequel la gaine externe (5) est constituée d'acier, tel qu'AISI 316 SS.

7. Procédé selon l'une quelconque des revendications précédentes, dans lequel la gaine externe est dimensionnée et façonnée de telle façon que le diamètre externe de celle-ci reste sensiblement le même avant et après exposition de la gaine externe à des températures au-dessus de 1 100 °C, telles que des températures entre 1 200 et 1 500 °C.

8. Procédé selon l'une quelconque des revendications précédentes, dans lequel le matériau endothermique (2) est un matériau à base de caoutchouc ou un matériau à base de polymère.

9. Procédé selon l'une quelconque des revendications précédentes, dans lequel le matériau endothermique (2) contient des charges inorganiques dans un liant.

10. Procédé selon l'une quelconque des revendications précédentes, dans lequel l'objet (1) a déjà été installé avant que le matériau endothermique (2) et la gaine externe (5) aient été disposés sur ce dernier.

11. Revêtement pour protection contre le feu d'un objet (1), le revêtement comprenant :
- un matériau endothermique (2) fourni sous forme d'une bande (3) et adapté pour être enroulé hélicoïdalement autour de l'objet (1) d'une manière chevauchante conduisant à une surface externe étagée (6) faisant face à une gaine externe (5), et
- la gaine externe (5) adaptée pour être disposée de manière à recouvrir au moins une partie du matériau endothermique (2),
dans lequel la gaine externe (5) comprend du métal, et
dans lequel le matériau endothermique (2) est un matériau qui, à une première température élevée, subira un premier processus endothermique au cours duquel de l'eau est libérée et évaporée, et **caractérisé en ce que** le matériau endothermique (2) est un matériau qui, à une seconde température élevée, supérieure à la première température élevée, subira un second processus endothermique au cours duquel est créée une barrière au feu physiquement et thermiquement stable.

12. Revêtement pour protection contre le feu selon la revendication 11, dans lequel la gaine externe (5) est constituée de métal.

13. Revêtement pour protection contre le feu selon la revendication 11 ou 12, dans lequel la gaine externe (5) est constituée d'acier, tel qu'AISI 316 SS.

14. Revêtement pour protection contre le feu selon l'une quelconque des revendications 11 à 13, dans lequel la gaine externe est dimensionnée et façonnée de telle façon que le diamètre externe de celle-ci reste sensiblement le même avant et après exposition de la gaine externe à des températures au-dessus de 1 100 °C, telles que des températures entre 1 200 et 1 500 °C.
